# FASCICULE DE BREVET EUROPEEN

(11) **EP 1 446 223 B1**
(45) Date de publication et mention de la délivrance du brevet: **22.01.2014**
(21) Numéro de dépôt: 02795319.9
(22) Date de dépôt: 16.10.2002
(51) Int. Cl.: B01J 20/18, B01D 53/04, B01D 53/02

(54) **UN PROCEDE DE PURIFICATION DE L'AIR UTILISANT UN ADSORBANT ZEOLITIQUE AU BARIUM ET CALCIUM**
DIE REINIGUNG VON LUFT MIT BARIUM UND CALCIUM AUSGETAUSCHTES ZEOLITISCHES ADSORBENS
A PROCEDURE FOR PURIFYING AIR WITH A BARIUM AND CALCIUM ZEOLITE ADSORBENT

(30) Priorité: 12.11.2001 FR 0114588
(43) Date de publication de la demande: 18.08.2004
(73) Titulaire: L'AIR LIQUIDE, Société Anonyme pour l'Etude et l'Exploitation des Procédés Georges Claude, 75007 Paris (FR)
(72) Inventeur: MOREAU, Serge, F-78140 Vélizy Villacoublay (FR); RENOU, Elise, F-92370 Chaville (FR); SZULMAN, Claire, F-92190 Meudon (FR)
(74) Mandataire: Pittis, Olivier
(86) Numéro de dépôt international: PCT/FR2002/003539
(87) Numéro de publication internationale: WO 2003/041858

(56) Documents cités:
- EP-A- 1 064 978
- DD-A- 150 887
- US-A- 5 164 076
- US-A- 5 264 133
- PATENT ABSTRACTS OF JAPAN vol. 1998, no. 09, 31 juillet 1998 (1998-07-31) & JP 10 085589 A (TOSOH CORP), 7 avril 1998 (1998-04-07)

## Description

La présente invention concerne un adsorbant zéolitique échangé par des cations baryum et calcium, un procédé de purification de gaz utilisant un tel adsorbant, en particulier de pré-traitement d'air préalablement à sa séparation par distillation cryogénique, et son procédé de fabrication.

Il est connu que l'air atmosphérique contient des composés devant être éliminés avant son introduction dans les échangeurs thermiques de la boîte froide d'une unité de séparation d'air, par exemples le dioxyde de carbone (CO₂) et/ou la vapeur d'eau (H₂O).

En effet, en l'absence d'un tel pré-traitement de l'air pour en éliminer les impuretés CO₂ et vapeur d'eau, il peut se produire une condensation et une solidification en glace de ces impuretés, lors du refroidissement de l'air à température cryogénique, d'où il peut résulter des problèmes de colmatage de l'équipement, notamment les échangeurs thermiques, des colonnes de distillation...

En outre, il est également souhaitable d'éliminer les impuretés hydrocarbures susceptibles d'être présentes dans l'air afin d'éviter tout risque de détérioration de l'équipement.

Il est préférable d'éliminer également les oxydes d'azote susceptibles de se trouver dans l'air, comme le N₂O, afin d'éviter qu'ils se concentrent et se déposent dans les vaporiseurs des installations de distillation cryogénique, au risque de les boucher.

Actuellement, ce pré-traitement de l'air est effectué par adsorption par mise en oeuvre, selon le cas, d'un procédé TSA (Temperature Swing Adsorption) ou PSA (Pressure Swing Adsorption).

Des procédés TSA de purification d'air sont notamment décrits dans les documents US-A-3,738,084 et FR-A-7725845.

En général, l'élimination des impuretés CO₂ et vapeur d'eau (H₂O) est effectuée sur un ou plusieurs lits d'adsorbants, de préférence plusieurs lits d'adsorbants, à savoir généralement un premier adsorbant destiné à arrêter préférentiellement l'eau, par exemple un lit d'alumine activée, de gel de silice ou de zéolites, et un deuxième lit d'adsorbant pour arrêter préférentiellement le CO₂, par exemple une zéolite. En effet, obtenir une élimination efficace du CO₂ et de la vapeur d'eau contenus dans l'air sur un même et unique lit d'adsorbant n'est pas chose aisée, car l'eau présente une affinité pour les adsorbants nettement supérieure à celle du CO₂ et il est donc habituel d'utiliser au moins deux lits ou couches d'adsorbants de natures différentes.

A ce titre, on peut citer notamment les documents US-A-5,531,808, US-A-5,587,003 et US-A-4,233,038.

Le document D.W. Breck, « Zeolite molecular sieves », Krieger Publishing Company, 1984, p. 612 préconise d'utiliser une zéolite de type 13X non-échangée (forme sodium) pour éliminer de faibles quantités de CO₂ et éventuellement d'eau car elle présente une forte affinité et sélectivité pour ces molécules polaires.

Cependant, la zéolite 13X ne permet pas d'arrêter aussi bien ou mieux que le CO₂ toutes les molécules néfastes susceptibles d'être présentes dans un flux gazeux, en particulier les hydrocarbures et les oxydes d'azote, comme rappelé par E. Alpay, « Adsorption parameters for strongly adsorbed hydrocarbon vapours on some commercial adsorbents », Gas Sep. & Purif., vol 10, N°1, pp 25 (1996) ; G. Calleja, "Multicomponent adsorption equilibrium of ethylene, propane, propylene and CO2 on 13X zeolite", Gas Sep. & Purif., Vol 8, N°4, P. 247 (1994) ; V. R. Choudhary, "Sorption isotherms of methane, ethane, ethene and carbon dioxide on NaX, NaY and Na-mordenite Zeolites", J. Chem. Soc. Faraday Trans., 91(17), P. 2935 (1995) ; et A. Cointot, P. Cartaud, C. Clavaud, « Etude de l'adsorption du protoxyde d'azote par différents tamis moléculaires », Journal de Chimie Physique, Vol 71, N°5, P. 765-770 (1974).

Il s'ensuit alors qu'une unité industrielle d'épuration en tête d'air strictement dimensionnée pour l'arrêt du dioxyde de carbone avec une zéolite standard, typiquement une zéolite 13X ou 5A, n'arrête que partiellement, voire pas du tout, l'éthylène, le propane, d'autres hydrocarbures et le protoxyde d'azote, comme rappelé par le document Dr. J. Reyhing, « Removing hydrocarbons from the process air of air-separation plants using molecular-sieve adsorbers », Linde Reports on science and technology, 36/1983.

En ce qui concerne l'arrêt du protoxyde d'azote, l'inefficacité de la zéolite 5A pour l'arrêt du N₂O par rapport au CO₂ a été mise en évidence par U. Wenning, Nitrous oxide in air separation plants, MUST'96, Munich Meeting on Air Separation Technology, October 10-11, 1996.

Une solution a été proposée par le document EP-A-1064978 qui décrit un adsorbant constitué d'une zéolite X ou LSX (Low Silica X = zéolite X pauvre en silice) échangée à au moins 30% par des cations baryum, de préférence à au moins 75%, laquelle peut être utilisée pour l'élimination de certaines impuretés de l'air, en particulier le protoxyde d'azote, le propane et l'éthylène, les cations résiduels étant des cations sodium et/ou potassium.

Les zéolites qui y sont décrites sont obtenues par un procédé d'échange d'ions assez complexe, dès que le taux d'échange au baryum doit dépasser 50%.

En effet, une zéolite est habituellement constituée d'une charpente aluminosilicate chargée négativement dans laquelle se placent des cations compensateurs à des endroits définis par la charge du cation, sa taille et son pouvoir polarisant, ainsi que par la charge de la charpente zéolithique et sa structure cristalline.

Selon ce document, la zéolite échangée est obtenue par échange d'ions en partant d'une zéolite X ou LSX contenant initialement du sodium (Na⁺) pour arriver à une zéolite contenant au moins 30% de baryum.

Or, les cations Ba²⁺ sont volumineux et ne peuvent atteindre certains sites cristallographiques occupés par les cations Na⁺, ce qui a pour effet de limiter le taux d'échange à environ 75% au maximum.

Pour atteindre des valeurs plus élevées (>75%), il est nécessaire de recourir à des opérations supplémentaires destinées à forcer la migration des cations vers les sites peu accessibles. La procédure applicable consiste à réaliser un premier échange au baryum, puis à sécher la zéolite et la chauffer à au moins 200° C. Les cations Ba²⁺ se trouvent alors dépouillés de leur cortège de molécules d'eau de solvatation et, par ailleurs, ils sont soumis à une agitation thermique plus élevée. La migration vers les sites inaccessibles peut alors avoir lieu.

Il faut noter que ces sites sont thermodynamiquement favorisés et que seules des contraintes stériques empêchent les cations de s'y placer. Par ailleurs, il apparaît que ce sont les sites accessibles qui confèrent ses propriétés remarquables aux cations baryum, c'est-à-dire les sites II et II'.

L'adsorbant décrit par EP-A-1064978 ne peut donc être considéré comme totalement satisfaisant au plan technique, les multiples traitements hydrothermaux auquel il doit être soumis abîment sa structure et il est également très cher par rapport aux adsorbants utilisés actuellement du fait de la forte quantité de baryum devant être utilisée pour réaliser l'échange d'ions.

Le document JP10085589 décrit un procédé pour adsorber préférentiellement l'azote dans l'air utilisant une zéolite échangée par des cations calcium et baryum.

Le document GB-A-1351600 décrit un procédé pour séparer les hydrocarbures d'un mélange en utilisant une zéolite échangée par des cations calcium et baryum.

Partant de là, le problème qui se pose alors est de pouvoir disposer d'un adsorbant de type zéolite qui soit approximativement aussi efficace pour l'élimination des hydrocarbures et, si possible, plus efficace pour l'élimination des oxydes d'azote présents dans un flux de gaz à purifier, en particulier de l'air, mais qui soit plus facile à fabriquer et donc de coût de revient moins élevé que celui connu de EP-A-1064978.

Le but de la présente invention est alors de tenter de résoudre ce problème en proposant un adsorbant zéolitique amélioré utilisable pour purifier des gaz, tel l'air, ainsi que son procédé de fabrication.

La solution de l'invention est alors un procédé de purification ou de séparation d'air utilisant un adsorbant zéolitique échangé par des cations calcium et par des cations baryum.

Dans le cadre de l'invention, par « échangé par des cations », on entend que les cations considérés sont ceux associés à des motifs tétraédriques AlO₂⁻ de la zéolite (phase zéolitique), lesquels cations échangés jouent un rôle dans le mécanisme de l'adsorption des composés gazeux à éliminer.

De même, par « cations échangeables », on entend des cations pouvant être substitués ou remplacés par d'autres cations par mise en oeuvre d'un procédé d'échange d'ions.

Par « taux d'échange d'un cation x », on entend le nombre de charges portées par les cations x présents dans la zéolithe rapporté au nombre total de charges de l'ensemble des cations. Le taux d'échange varie entre 0 et 100%. La charge totale positive portée par les cations est égale à ta charge négative totale portée par les groupes AlO₂⁻. La quantité stoechiométrique correspond à cette charge totale.

Selon le cas, l'adsorbant de l'invention étant échangé de 10 à 90 % par des cations calcium et de 20 à 70 % par des cations baryum, la somme des cations baryum et calcium présents représentant au moins 20% des cations échangeables peut comprendre l'une ou plusieurs des caractéristiques techniques suivantes :
- il est échangé de 20 à 70 % par des cations calcium, de préférence de 30 à 50 % par des cations calcium.
- Il est échangé de 30 à 50 % par des cations baryum.
- la somme des cations baryum et calcium présents représente au moins 30% des cations échangeables, de préférence au moins 40% des cations échangeables.
- il contient, par ailleurs, des cations résiduels sodium et/ou potassium, de préférence la somme de cations résiduels sodium et/ou potassium représente moins de 40% des cations échangeables, de préférence moins de 30% des cations échangeables, préférentiellement encore moins de 20% des cations échangeables.
- il comprend une phase zéolitique et au moins un liant représentant moins de 30% en poids du poids total de l'adsorbant. De préférence, ta phase zéolitique représente au moins de 70% en poids de la masse totale d'adsorption.
- il contient de 15 à 65 % de calcium, de 25 à 80 % de baryum et des cations résiduels sodium et/ou potassium, la somme des cations baryum, calcium, sodium et potassium présents représentant au moins 80% des cations présents dans l'adsorbant, de préférence la somme des cations baryum, calcium, sodium et potassium présents représentent de 90% à 100% des cations présents dans l'adsorbant
- la zéolite a une taille de pores comprise entre 4 et 10 Å, de préférence 5 et 8 Å.
- la zéolite contient, en outre, au moins un cation du groupe IA ou IIA,
- la zéolite a un rapport Si/Al compris entre 1 et 1.50, de préférence compris entre 1 et 1.26.

L'adsorbant de l'invention est utilisable dans un procédé de purification ou de séparation d'un gaz ou mélange gazeux, en particulier de l'air.

Selon le cas, le procédé de purification de gaz de l'invention peut comprendre l'une ou plusieurs des caractéristiques techniques suivantes :
- on élimine au moins une impureté choisie parmi les hydrocarbures et les oxydes d'azote (NxOy), de préférence parmi l'éthylène, l'acétylène, le butane et le propane.
- on élimine par ailleurs le CO₂ et/ou la vapeur d'eau sur la zéolite de l'invention ou sur un lit ou plusieurs autres lits arrêtant ces composés gazeux nuisibles. Par exemple, un lit d'alumine activée peut être utilisé pour adsorber l'eau, ce lit sera situé en amont du lit de zéolite Ca/Ba selon l'invention, lorsqu'on considère le, sens de déplacement du flux de gaz à purifier.
- il est choisi parmi les procédés PSA ou TSA, de préférence TSA.
- le flux d'air débarrassé d'au moins une partie desdites impuretés est soumis à au moins une étape de distillation cryogénique de manière à produire de l'azote, de l'oxygène et/ou de l'argon.
- le flux gazeux est à une température comprise entre -40°C et +80°C, de préférence comprise entre -10°C et +50°C.
- la pression d'adsorption est comprise entre 2 bars et 30 bars, de préférence 4 bars et 20 bars.
- la pression de désorption est comprise entre 0,5 bars et 10 bars, de préférence 1 bar et 6 bars.
- le débit du flux gazeux est compris entre 1 et 10⁶ Nm³/h, de préférence 10⁴ et 5.10⁵ Nm³/h.
- la température de régénération est comprise entre 60°C et 400°C, de préférence entre 80°C et 300°C.
- le gaz de régénération de l'adsorbant est de l'azote ou un mélange d'azote et d'oxygène contenant une faible proportion d'oxygène (quelques % en vol.), de préférence le mélange azote/oxygène utilisé pour régénérer l'adsorbant est un gaz résiduaire ou un gaz déchet issu d'une unité de séparation cryogénique de l'air.
- le procédé de l'invention est mis en oeuvre dans au moins un adsorbeur, de préférence dans au moins deux adsorbeurs fonctionnant de manière alternée.
- le procédé TSA de l'invention fonctionne par cycle de purification, chaque cycle comportant les étapes successives suivantes:
   1) purification de l'air par adsorption des impuretés à pression super-atmosphérique et à température ambiante sur l'adsorbant,
   2) dépressurisation de l'adsorbeur, de préférence à contre-courant de l'adsorption, jusqu'à la pression atmosphérique ou en dessous de la pression atmosphérique,
   3) régénération de l'adsorbant à pression atmosphérique, de préférence à contre-courant de l'adsorption, notamment par les gaz résiduaires ou gaz déchets, typiquement de l'azote impur provenant d'une unité de séparation d'air et réchauffé jusqu'à une température supérieure à +80°C au moyen d'un ou plusieurs échangeurs thermiques,
   4) refroidissement à température ambiante, sur-ambiante ou sub-ambiante de l'adsorbant, notamment en continuant à y introduire ledit gaz résiduaire issu de l'unité de séparation d'air, mais non réchauffé, de préférence à contre-courant de l'adsorption
   5) repressurisation de l'adsorbeur avec de l'air purifié issu, par exemple, d'un autre adsorbeur se trouvant en phase de production, de préférence à co-courant de l'adsorption.

Un procédé de fabrication d'un adsorbant zéolitique échangé par des cations calcium et baryum, comprend les étapes suivantes
(a) on soumet une zéolite contenant des cations sodium et/ou potassium à un premier échange d'ions par mise en contact de ladite zéolite avec une solution contenant des cations calcium,
(b) on soumet la zéolite issue de l'étape (a) à un deuxième échange d'ions par mise en contact de ladite zéolite avec une solution contenant des cations baryum,
(c) si nécessaire, on répète les étapes (a) et/ou (b) jusqu'à obtention du taux d'échange souhaité en lesdits cations baryum et calcium dans la zéolite,
(d) on récupère une zéolite échangée par des cations calcium et baryum.

Selon le cas, le procédé de fabrication peut comprendre l'une ou plusieurs des caractéristiques techniques suivantes :
- après chaque étape (a) et après chaque étape (b), on procède à une vidange de la solution d'échange et éventuellement on rince la zéolite obtenue.
- après l'étape (a) et/ou après l'étape (b), on opère un traitement thermique de la zéolite par chauffage à plus de 95°C pendant une durée suffisante pour assurer une migration des cations vers les sites AlO₂- de la zéolite, de préférence le chauffage est maintenu pendant 15 minutes à 12 heures.
- après chaque traitement thermique et avant toute nouvelle étape d'échange d'ions subséquente, on réhydrate la zéolite, de préférence avec de l'eau déminéralisée.
- la zéolite est sous forme de poudre ou sous forme agglomérée.
- on récupère les solutions salines ayant servi à une l'étape (a) et/ou à une étape (b) et on les réutilise durant une autre étape (a) et/ou (b) subséquente, en particulier la solution de sel de baryum.
- la zéolite est sous forme de poudre ou sous forme agglomérée.
- on récupère les solutions salines ayant servi à l'étape (a) et/ou à l'étape (b) et on les réutilise durant l'étape (c), en particulier la solution de sel de baryum.
- on consomme une quantité de baryum allant de 110 % à 200% de la quantité introduite dans la zéolite.
- les étapes (a) et (b) sont successives, dans un ordre quelconque, ou, selon le cas, réalisées en même temps et en une seule étape en utilisant une solution saline formée d'un mélange de sels de calcium et baryum.
- les étapes (a) et (b) sont réalisées en colonne d'échange d'ions ou en réacteur agité (batch).
- les étapes (a) et (b) sont réalisées simultanément et en une seule étape en utilisant une solution contenant des cations calcium et baryum
- la zéolite de départ est une zéolite X ou LSX sous forme sodium/potassium (i.e. non échangée) qui subit éventuellement et préalablement à l'étape (a), une étape préliminaire de traitement avec une solution d'ammonium et/ou de sodium.
- subséquemment à l'étape (d), on soumet la zéolite échangée par des cations calcium et baryum à une étape d'activation dans un milieu exempt d'eau, par balayage avec un gaz sec ou sous vide, à une température supérieure ou égale à 200°C.
- on mélange la zéolite avec un liant, tel de l'argile, du gel de silice ou similaires pour obtenir des particules de zéolite agglomérées et optionnellement on convertit le liant en zéolite pour former des particules sans liant. Cette opération a lieu avant ou après l'échange d'ions Ca/Ba, de préférence avant.

L'invention va maintenant être mieux comprise grâce aux explications et aux exemples comparatifs donnés ci-après à titre illustratif et en références aux figures annexées.

Les inventeurs de la présente invention ont mis en évidence qu'en pratiquant un échange de calcium, puis un échange de baryum sur une zéolite X ou LSX de départ, ou l'inverse, on obtient au final un adsorbant échangé par des cations baryum et calcium qui, d'une part, est plus facile et moins coûteux à fabriquer que s'il était uniquement échangé par du baryum et, d'autre part, qui pouvait être utilisé efficacement pour séparer ou purifier des mélanges gazeux, en particulier l'air, grâce à une adsorption sélective des impuretés contenues dans ce mélange, en particulier les hydrocarbures et les oxydes d'azote.

Le procédé de fabrication d'une telle zéolite échangée au calcium et au baryum consiste à partir d'une zéolite, de préférence X ou LSX, sous forme sodium et/ou potassium, sur laquelle on effectue un échange d'ions avec des cations calcium, à un taux suffisant pour remplacer les cations sodium qui occupent les sites peu accessibles. En effet, il apparaît que les cations Ca²⁺ se placent sans difficulté dans tous les sites, contrairement aux cations baryum, et que les sites peu accessibles sont aussi les plus favorables du point de vue de la thermodynamique ; on introduit donc une quantité de calcium juste suffisante pour occuper les sites peu accessibles, soit typiquement de 30 à 50 % des sites disponibles dans la zéolite (motifs AlO₂-).

Après l'échange au calcium, on réalise un échange au baryum, les cations Ba²⁺ se plaçant aux sites accessibles.

Une variante du procédé consiste à réaliser l'échange en une seule fois, à partir d'une solution mixte de calcium et baryum.

Le produit ainsi obtenu présente, après activation, des propriétés comparables à la zéolite échangée au baryum pur, avec en plus une capacité supplémentaire vis-à-vis des oxydes d'azote.

Par ailleurs, la fabrication de ce produit se révèle bien plus facile et plus favorable à la conservation de la structure de la zéolite, les échanges d'ions et activations successifs ayant toujours pour effet de dégrader un peu la zéolite, par attaque hydro-thermale.

De plus, le coût du produit final est nettement abaissé par le double effet du procédé de préparation beaucoup plus simple et du moindre prix du calcium par rapport au baryum.

L'échange d'ions se fait sur la zéolite de départ, qui peut être une X ou LSX, contenant initialement du sodium et/ou du potassium qui sont des cations facilement échangeables, la zéolite pouvant être sous forme de poudre non agglomérée ou bien mise en forme en extrudés, en billes ou sous toute autre forme.

Pour réaliser les échanges d'ions, on utilise de préférence une solution de sels de calcium et/ou baryum, telle qu'une solution de chlorure, à un pH inférieur à environ 6.

La mise en contact entre la zéolite et la solution saline a lieu par exemple par immersion de l'ensemble de la zéolite dans un temps aussi court que possible, ceci pour assurer un échange d'ions homogène dans la zéolite.

En variante, on peut mettre la zéolite en poudre en suspension agitée dans l'eau, puis ajouter lentement la solution de sels de calcium et/ou baryum, en réalisant une agitation suffisant pour répartir la solution dans tout le volume en suspension.

Dans tous les cas, il faut réaliser la mise en contact dans des conditions où le sel de calcium et/ou baryum se répartira dans l'ensemble du volume de zéolite, avant que l'échange ait eu le temps de se faire, ceci pour assurer que le calcium et/ou baryum sera réparti de manière homogène dans toute la masse de la zéolite.

Les molarités en sel sont comprises entre 1 M et 0.01 M, la température entre 20°C et 100 °C, et le temps de contact entre 20 min et 3 heures.

Après échange, la zéolite est rincée à l'eau pure, égouttée, puis activée entre environ 300°C et 450°C, sous flux de gaz sec ou sous vide, dans des conditions qui minimisent le contact entre la vapeur d'eau libérée et la zéolite.

### Exemples avec adsorbants selon l'invention

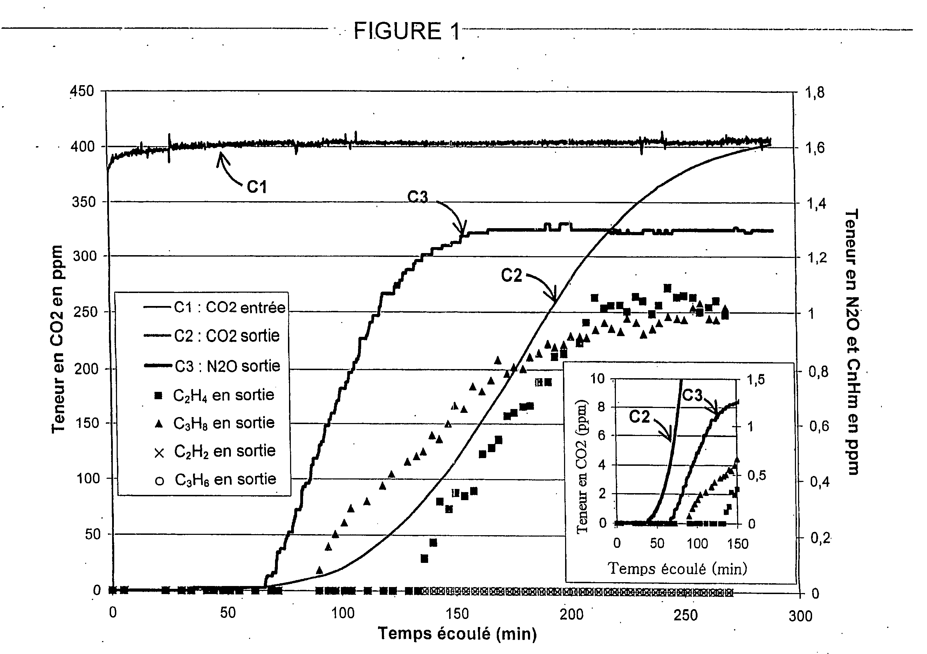

Afin de démontrer l'efficacité d'un procédé de purification selon l'invention, on a réalisé une courbe de percée (figure 1) sur des particules zéolitiques d'un adsorbant CaBaX selon l'invention.

Pour ce faire, on a introduit un flux d'azote pollué par les impuretés ci-dessous mentionnées en entrée d'un lit d'adsorbant contenant lesdites particules CaBaX et on a mesuré, en continu, la concentration en ces impuretés en sortie (en aval) dudit lit au cours du temps.

Les conditions opératoires des tests sont les suivantes :
- flux d'azote pollué par 400 ppm en volume de CO₂ (courbe C1), 1,3 ppm vol. de N₂O et 1 ppm vol. de C₂H₄, C₃H₈, C₂H₂ et C₃H₆
- pression d'adsorption de 6 bar (6.10⁵ Pa)
- flux de gaz à une température de l'ordre de 20°C
- débit de 10 Nm³/h du flux de gaz
- 400 g de particules d'une zéolite CaBaX échangée à environ 40% en Ca et 40% en Ba et contenant des cations Na et K pour le reste (i.e. jusqu'à 100% des cations échangeables).

Les résultats obtenus sont consignés sur la figure 1 où l'on voit que toutes les impuretés secondaires (C₂H₄, C₃H₈, C₂H₂, C₃H₆) percent après le CO₂ (courbe C2).

Par ailleurs, il est à noter que l'acétylène (courbe x) et le propylène (courbe o) ne percent pas après plus de 250 minutes.

En outre, on constate une élimination quasi-simultanée des impuretés CO₂ et N₂O pendant plus de 60 minutes (courbes C2 et C3, respect.), c'est-à-dire sans régénération pendant toute cette période de temps.

Plus précisément, sur la figure 1 est également donnée (en bas à droite) une vue grossie des courbes C2 et C3 qui permet de constater que le N₂O perce en fait après le CO₂.

D'autres essais analogues ont été réalisés en utilisant des zéolites CaBaX selon l'invention mais présentant des teneurs en cations différentes, en particulier :
- une zéolite CaBaX échangée à 35% au calcium, à 50% au baryum et contenant des cations Na et K pour le reste (i.e. environ 15%) et
- une zéolite CaBaX échangée à 45% au calcium, à 40% au baryum et contenant des cations Na et K pour le reste (i.e. environ 15%).

Durant ces essais, les conditions opératoires sont les mêmes que précédemment.

Les résultats obtenus sont très similaires à ceux donnés en figure 1, en particulier, là encore, on constate que les impuretés secondaires percent toutes après le CO₂.

### Exemples comparatifs avec adsorbants selon l'art antérieur

A titre comparatif, plusieurs essais avec des adsorbants selon l'art antérieur ont été réalisés dans les mêmes conditions que pour les zéolites CaBaX de l'exemple selon l'invention.

Plus précisément, ces essais comparatifs ont été effectués avec
- avec une zéolite 13X non échangée, c'est-à-dire contenant uniquement des cations Na et K,
- avec une zéolite CaX échangée à 60% au calcium et contenant des cations Na et K pour le reste, et
- avec une zéolite BaX échangée à 94% au baryum et contenant des cations Na et K pour le reste.

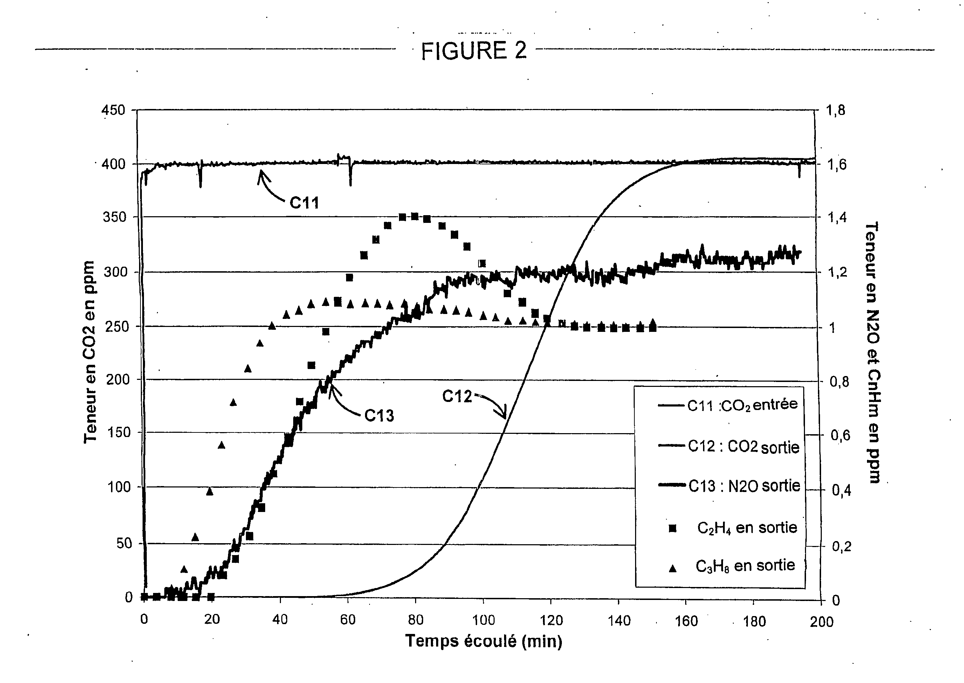

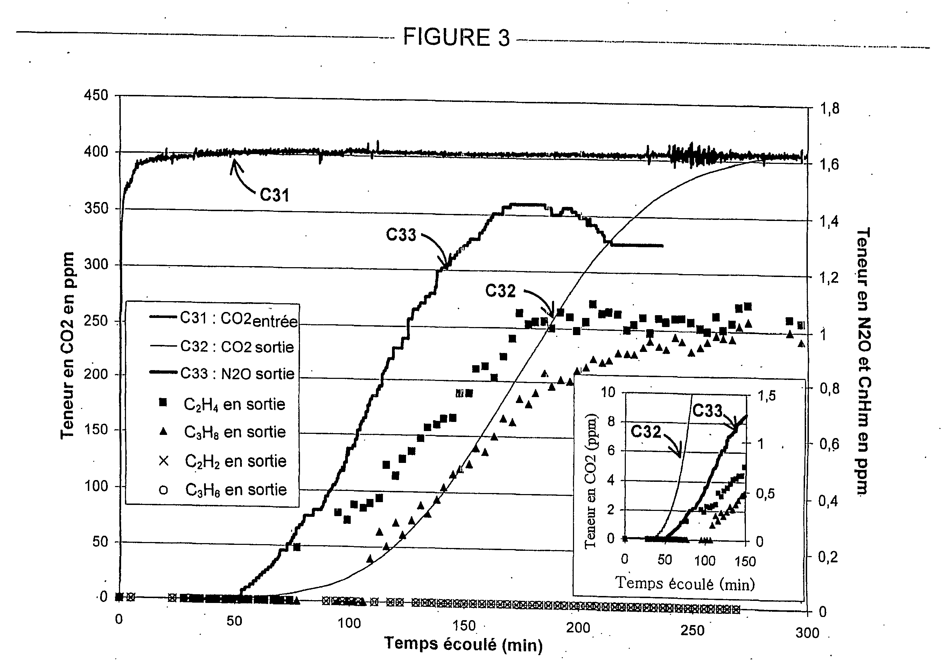

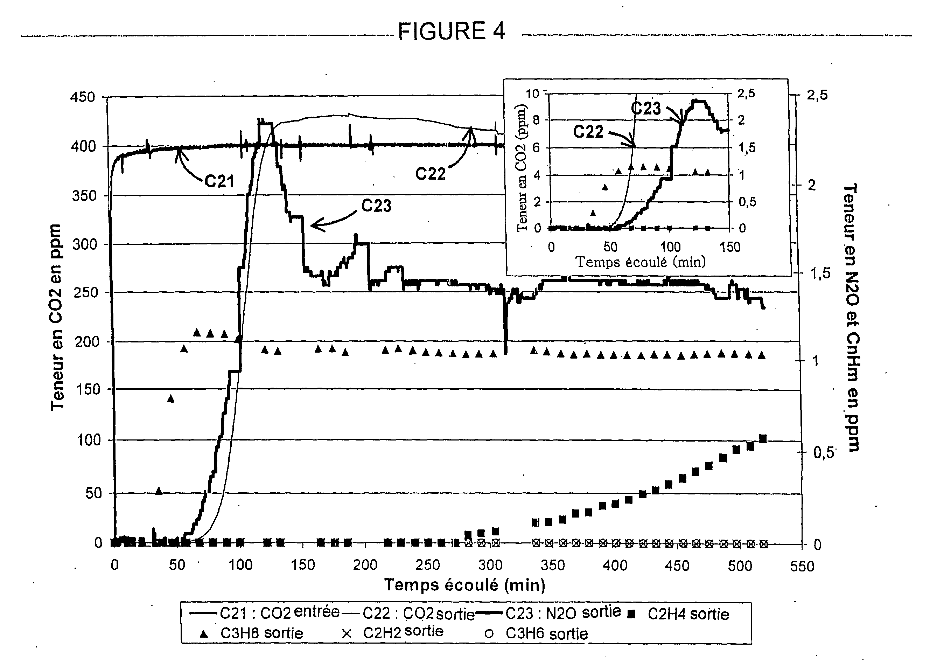

Les résultats obtenus avec ces adsorbants ont été consignés sur les figures 2 à 4 et montrent que :
- avec la zéolite 13X non échangée (figure 2), l'éthylène, le propane et le N₂O percent largement avant le CO₂. A noter que, dans ce cas, le flux de gaz testé ne contenait pas de composés C₂H₂ et C₃H₆.
- avec la zéolite CaX échangée à 60% (figure 4), si l'éthylène est assez bien arrêté, il apparaît que le N₂O perce également après le CO₂ et que le propane n'est par contre pas éliminé.
- avec la zéolite BaX échangée à 94% (figure 3), l'éthylène et le N₂O sont beaucoup moins bien arrêtés qu'avec les adsorbants CaBaX selon l'invention testés. A noter par ailleurs que l'échange à 94% au baryum est compliqué et coûteux à obtenir.

Il ressort des exemples ci-dessus que les zéolites de la présente invention échangées par des cations calcium et baryum sont particulièrement efficaces dans une utilisation en procédé TSA pour purifier de l'air atmosphérique en ses impuretés CO₂ et N₂O, mais aussi C₂H₄, C₃H₈, C₂H₂, C₃H₆.

## Revendications

1. Procédé de purification ou de séparation d'air utilisant un adsorbant zéolitique échangé par des cations calcium et baryum contenant ou étant formé de zéolite X ou LSX, et étant échangé de 10 à 90 % par des cations calcium et de 20 à 70 % par des cations baryum, la somme des cations baryum et calcium présents représentant au moins 20% des cations échangeables.

2. Procédé selon la revendication 1, **caractérisé en ce que** l'adsorbant est échangé de 20 à 70 % par des cations calcium.

3. Procédé selon la revendication 1, **caractérisé en ce que** ledit procédé utilise un adsorbant dans lequel la somme des cations baryum et calcium présents représente au moins 30% des cations échangeables.

4. Procédé selon la revendication 1, **caractérisé en ce que** ledit adsorbant contient, par ailleurs, des cations résiduels sodium et/ou potassium, la somme de cations résiduels sodium et/ou potassium représentant moins de 40% des cations échangeables.

5. Procédé selon la revendication 1, **caractérisé en ce que** ledit adsorbant comprend une phase zéolitique et au moins un liant représentant moins de 30% en poids du poids total de l'adsorbant.

6. Procédé selon la revendication 1, **caractérisé en ce que** ledit adsorbant contient de 15 à 65 % de calcium, de 25 à 80 % de baryum et des cations résiduels sodium et/ou potassium, la somme des cations baryum, calcium, sodium et potassium présents représentant au moins 80% des cations présents dans l'adsorbant.

7. Procédé selon la revendication 1, **caractérisé en ce que** la somme des cations baryum, calcium, sodium et potassium présents représente de 90% à 100% des cations présents dans l'adsorbant.

8. Procédé selon la revendication 1, dans lequel on élimine au moins une impureté choisie parmi les hydrocarbures et les oxydes d'azote (NxOy).

9. Procédé selon la revendication 8, dans lequel on élimine au moins une impureté choisie parmi l'éthylène, l'acétylène, le butane et le propane.

10. Procédé selon la revendication 1, dans lequel on élimine par ailleurs du CO₂ et/ou de la vapeur d'eau.

11. Procédé selon la revendication 1, choisi parmi les procédés PSA ou TSA.

12. Procédé selon la revendication 1, dans lequel au moins une partie du flux gazeux débarrassé d'au moins une partie desdites impuretés est soumis à au moins une étape de distillation cryogénique.

## Patentansprüche

1. Verfahren zur Aufreinigung oder Auftrennung von Luft unter Verwendung eines zeolithartigen Adsorptionsmittels, welches einen Austausch mittels Calcium- und Bariumkationen erfahren hat und welches Zeolith X oder LSX enthält oder daraus gebildet ist, wobei der Austausch zu 10 bis 90 % mittels Calciumkationen und zu 20 bis 70 % mittels Bariumkationen erfolgt, wobei die Summe der vorliegenden Barium- und Calciumkationen mindestens 20 % der austauschbaren Kationen ausmacht.

2. Verfahren nach Anspruch 1, **dadurch gekennzeichnet, dass** das Adsorptionsmittel einen Austausch von 20 bis 70 % mittels Calciumkationen erfährt.

3. Verfahren nach Anspruch 1, **dadurch gekennzeichnet, dass** in dem Verfahren ein Adsorptionsmittel verwendet wird, bei welchem die Summe der vorliegenden Barium- und Calciumkationen mindestens 30 % der austauschbaren Kationen ausmacht.

4. Verfahren nach Anspruch 1, **dadurch gekennzeichnet, dass** das Adsorptionsmittel darüber hinaus verbleibende Natrium- und/oder Kaliumkationen enthält, wobei die Summe der verbleibenden Natrium- und/oder Kaliumkationen weniger als 40 % der austauschbaren Kationen ausmacht.

5. Verfahren nach Anspruch 1, **dadurch gekennzeichnet, dass** das Adsorptionsmittel eine zeolithartige Phase und mindestens ein Bindemittel umfasst, das weniger als 30 Gewichts-% des Gesamtgewichts des Adsorptionsmittels ausmacht.

6. Verfahren nach Anspruch 1, **dadurch gekennzeichnet, dass** das Adsorptionsmittel 15 bis 65 % an Calcium, 25 bis 80 % an Barium sowie verbleibende Natrium- und/oder Kaliumionen enthält, wobei die Summe der vorliegenden Barium-, Calcium, Natrium- und Kaliumionen mindestens 80 % der im Adsorptionsmittel vorliegenden Kationen ausmacht.

7. Verfahren nach Anspruch 1, **dadurch gekennzeichnet, dass** die Summe der vorliegenden Barium-, Calcium, Natrium- und Kaliumionen 90 % bis 100 % der im Adsorptionsmittel vorliegenden Kationen ausmacht.

8. Verfahren nach Anspruch 1, in welchem mindestens eine Verunreinigung entfernt wird, die aus den Kohlenwasserstoffen und den Stickoxiden (NxOy) ausgewählt ist.

9. Verfahren nach Anspruch 8, in welchem mindestens eine Verunreinigung entfernt wird, die aus Ethylen, Acetylen, Butan und Propan ausgewählt ist.

10. Verfahren nach Anspruch 1, in welchem darüber hinaus CO2 und/oder Wasserdampf entfernt wird/werden.

11. Verfahren nach Anspruch 1, welches aus den PSA- oder TSA-Verfahren ausgewählt ist.

12. Verfahren nach Anspruch 1, wobei mindestens ein Teil des Gasstroms, der von mindestens einem Teil der Verunreinigungen befreit wurde, mindestens einem Schritt der Tieftemperaturdestillation unterzogen wird.

## Claims

1. Process for the purification or separation of air, using a zeolite adsorbent exchanged by calcium and barium cations containing or being formed by zeolite X or LSX, and being 10 to 90% exchanged by calcium cations and 20 to 70% exchanged by barium cations, the sum of the barium and calcium cations present representing at least 20% of the exchangeable cations.

2. Process according to claim 1, **characterised in that** the adsorbent is 20 to 70% exchanged by calcium cations.

3. Process according to claim 1, **characterised in that** said process uses an adsorbent in which the sum of the barium and calcium cations present represents at least 30% of the exchangeable cations.

4. Process according to claim 1, **characterised in that** said adsorbent further contains residual sodium and/or potassium cations, the sum of the residual sodium and/or potassium cations representing less than 40% of the exchangeable cations.

5. Process according to claim 1, **characterised in that** said adsorbent comprises a zeolite phase and at least one binder representing less than 30% by weight of the total weight of the adsorbent.

6. Process according to claim 1, **characterised in that** said adsorbent contains from 15 to 65% of calcium, from 25 to 80 % of barium and residual sodium and/or potassium cations, the sum of the barium, calcium, sodium and potassium cations present representing at least 80 % of the cations present in the adsorbent.

7. Process according to claim 1, **characterised in that** the sum of the barium, calcium, sodium and potassium cations present represents 90% to 100% of the cations present in the adsorbent.

8. Process according to claim 1, wherein at least one impurity selected from among the hydrocarbons and nitrogen oxides (NxOy) is eliminated.

9. Process according to claim 8, wherein at least one impurity selected from among ethylene, acetylene, butane and propane is eliminated.

10. Process according to claim 1, wherein CO₂ and/or water vapour is also eliminated.

11. Process according to claim 1, selected from among the PSA or TSA processes.

12. Process according to claim 1, wherein at least some of the gas stream freed from at least some of said impurities is subjected to at least one cryogenic distillation step.
